# EUROPÄISCHE PATENTSCHRIFT

(11) **EP 0 339 188 B1**
(45) Veröffentlichungstag und Bekanntmachung des Hinweises auf die Patenterteilung: **30.03.1994**
(21) Anmeldenummer: 89101990.3
(22) Anmeldetag: 04.02.1989
(51) Int. Cl.: B27B 5/06, B23D 47/04, B23D 47/02

(54) **Plattenaufteilsäge**
Saw for dividing up panels
Scie pour découper des panneaux

(30) Priorität: 28.04.1988 DE 3814409
(43) Veröffentlichungstag der Anmeldung: 02.11.1989
(73) Patentinhaber: Holzma-Maschinenbau GmbH, D-75365 Calw (DE)
(72) Erfinder: Hartmann, Gerhard, D-7273 Ebhausen-Rotfelden (DE); Schwab, Burkhard, D-7260 Calw-Alzenberg (DE)
(74) Vertreter: Becker, Maria, Dipl.-Phys.

(56) Entgegenhaltungen:
- EP-A- 0 066 818
- DE-A- 2 741 955
- DE-A- 3 107 436
- DE-A- 3 107 437
- DE-A- 3 542 605
- DE-C- 3 521 210

## Beschreibung

Die Erfindung betrifft eine Plattenaufteilsäge mit den Merkmalen des Oberbegriffes von Patentanspruch 1. Plattenaufteilsägen dieser Art sind bekannt (vgl. Prospekt "Winkelanlagen FIXOMAT" der Anmelderin - F 124/5.87/10).

Die Verschlussklappe wird dabei entsprechend einem programmierten Arbeitszyklus betätigt, wobei sie eine Abfallöffnung bzw. einen Abfallschacht öffnet und schliesst. Werden Platten, beispielsweise Spanplatten, aufgeteilt, so werden diese zunächst zur Herstellung einer Bezugskante besäumt, wobei im Zusammenhang mit dem hierzu erforderlichen Trennschnitt die Verschlussklappe in ihrer Offenstellung abgeklappt und dadurch die Abfallöffnung zum Aussondern des leistenförmigen Anschnittes geöffnet wird, der beim darauffolgenden Vorschubschritt für die nächste Schnittposition der Platte in die Abfallöffnung hineingeschoben wird. Danach wird die Verschlussklappe in ihre Schließstellung zurückgesteuert, worauf die anfallenden Plattenteilstücke zu einer weiteren Verarbeitungsstation über sie hinweggeschoben werden.

Sollen auf einer solchen Plattenaufteilsäge gleichzeitig mehrere Platten aufgeteilt werden, so geschieht dies üblicherweise durch Aufeinanderschichten der Platten zu einem Plattenpaket, wobei vor dem ersten Paketschnitt diese Platten gegen einen den Vorschub übernehmenden Schieber der Vorschubvorrichtung exakt auszurichten sind. Dafür sind bisher an solchen Plattenaufteilsägen, was druckschriftlich allerdings nicht belegbar ist, besondere Ausrichtvorrichtungen am Maschinenkörper angebracht, welche das Plattenpaket beim Vorschieben durch den Schieber gegen Anschläge drücken und somit die einzelnen Platten gleichmässig gegeneinander ausrichten, indem diese mit ihrer in Vorschubrichtung vorne liegenden Plattenkante zueinander kantenbündig ausgerichtet werden.

Für das kantenbündige Ausrichten der Platten war die Plattenaufteilsäge also mit zuzsätzlichen Ausrichtvorrichtungen auszustatten, deren Fertigung und Montage kostenmässig entsprechend zu Buche schlugen.

Aufgabe der vorliegenden Erfindung ist es, eine Plattenaufteilsäge gemäss dem Oberbegriff des Patentanspruches 1 so zu verbessern, dass auf die Anordnung wenigstens eines in eine Anschlagposition steuerbaren, speziell zu montierenden Anschlags der Ausrichtvorrichtung verzichtet werden kann.

Diese Aufgabe wird erfindungsgemäss durch die kennzeichnenden Merkmale des Patentanspruches 1 gelöst.

Bei der erfindungsgemässen Konstruktion übernimmt damit die Verschlussklappe zugleich die Funktion des Anschlages der Ausrichtvorrichtung. Diese ist damit lediglich noch mit einer geeigneten Antriebsvorrichtung für die Verschlussplatte auszustatten, die dann derart auszulegen ist, dass mit ihrer Hilfe entsprechend einem zugleich die Vorschubvorrichtung steuernden Arbeitsprogramm gemäss die Verschlussklappe in ihre Schliess-, Offen- und Anschlagstellung steuerbar ist.

Bei einer bevorzugten Ausführungsform der Erfindung ist die Anordnung der Verschlussklappe nach Patentanspruch 2 und die Ausbildung der Vorshubvorrichtung nach Pattentanspruch 3 vorgesehen.

In der Zeichnung ist, schematisiert, ein Ausführungsbeispiel einer erfindungsgemässen Plattenaufteilsäge, dargestellt. Es zeigen:
- Fig. 1: eine Draufsicht der mit einer Vorschubvorrichtung ausgestatteten Plattenaufteilsäge,
- Fig. 2: einen Schnitt der Plattenaufteilsäge entlang der Linie 2-2 der Fig. 1 gesehen, wobei sich die Verschlussklappe in einer hochgeschwenkten Anlaufstellung befindet,
- Fig. 3: eine Darstellung ähnlich Fig. 2, wobei sich die Verschlussklappe in ihrer Anschlagstellung befindet,
- Fig. 4: eine Darstellung ähnlich Fig. 2 und 3, wobei sich die Verschlussklappe in ihrer horizontalen, die Abfallöffnung verschliessenden Stellung befindet.

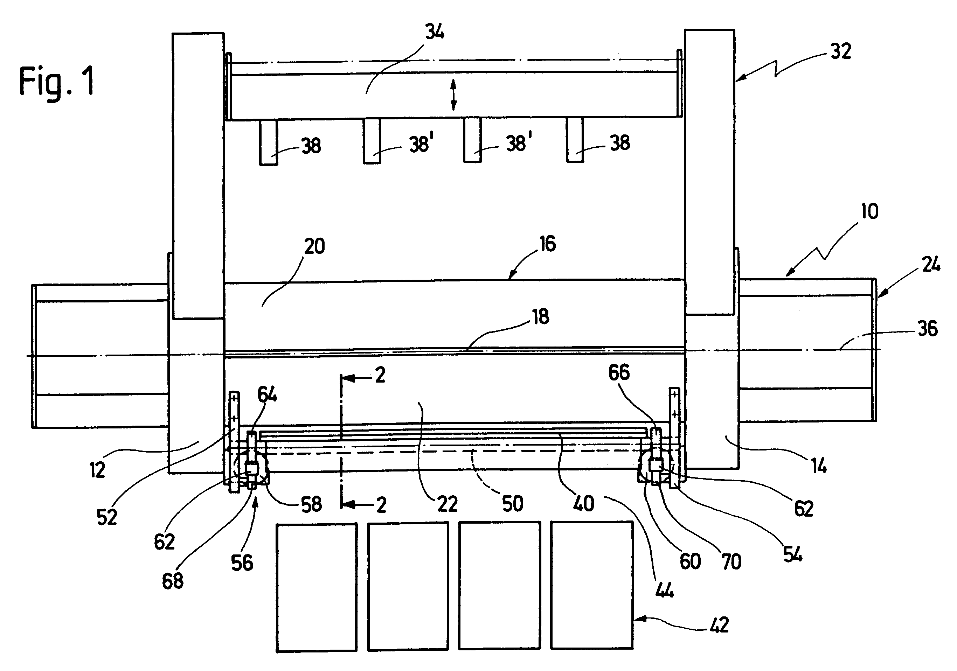

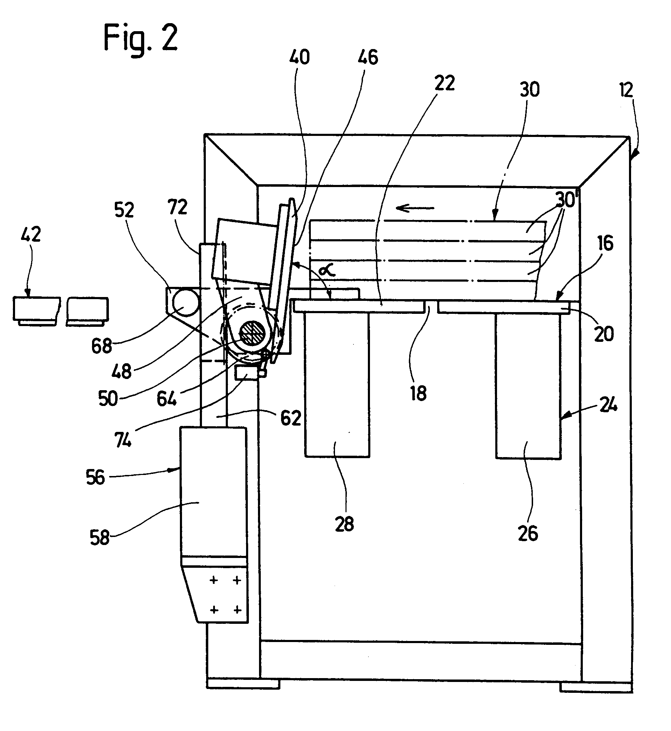

Die in Fig. 1 gezeigte Plattenaufteilsäge ist als Ganzes mit 10 bezeichnet. Sie weist in bekannter Weise einen zwischen zwei seitlichen Gestellrahmen 12 und 14 angeordneten Maschinentisch 16 auf, der zwei zwischen sich einen Sägeschlitz 18 definierende Tischplatten 20 und 22 aufweist. An der Unterseite dieser beiden Tischplatten 20 und 22 ist eine sich über die seitlichen Gestellrahmen 12, 14 hinauserstreckende Führung 24 für ein unter Tisch fahrendes, beispielsweise ein Vorritz- und ein Kreissägeblatt aufweisendes Sägeaggregat vorgesehen, welches zwischen Führungswangen 26 und 28 der Führung 24 geführt ist. Da diese Art der Führung an sich bekannt ist, wurde der Einfachheit halber darauf verzichtet, diese und das Sägeaggregat im einzelnen näher darzustellen. Zum Durchtrennen von Platten, beispielsweise Spanplatten, sowie Plattenpaketen - wobei ein solches in den Fig. 2 bis 4 strichpunktiert angedeutet und mit 30 bezeichnet ist -, tauchen Vorritz- und Kreissägeblatt aus dem Sägeschlitz 18 des Maschinentisches 16 nach oben aus.

An der Zuführseite der Plattenaufteilsäge ist eine als Ganzes mit 32 bezeichnete Vorschubvorrichtung angeschlossen, mit deren Hilfe Einzelplatten bzw. Plattenpakete zum Aufteilen in die Plattenaufteilsäge 10 einschiebbar sind. Diese Vorschubvorrichtung 32 ist in bekannter Weise mit einem programmgesteuerten Plattenschieber 34 ausgestattet, der senkrecht zu der durch den Sägeschlitz 18 definierten Trennebene 36 in einander entgegengesetzten Richtungen in geeigneter Weise verstellbar und feststellbar ist. Dieser ist in bekannter Weise mit beispielsweise pneumatisch betätigbaren Klemmzangen 38 und ggf. Plattenanschlägen ausgestattet. Vorschubvorrichtungen dieser Art sind an sich bekannt.

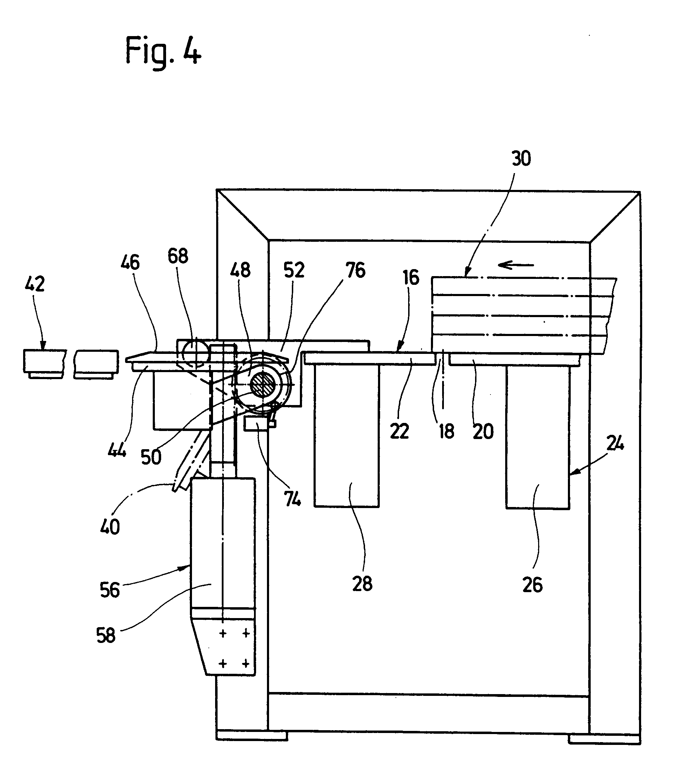

Werkstückaustrittsseitig ist dem Maschinentisch 16 eine sich zu dessen Längskante parallel erstreckende Verschlussklappe 40 zugeordnet, mit deren Hilfe eine zwischen dem Maschinentisch 16 und einem diesem im Abstand nachgeordneten Übernahmetisch 42 vorhandene Abfallöffnung 44 verschliessbar ist. Die Abfallöffnung 44 dient dazu, An- und Restschnittabfälle von Platten bzw. Plattenpaketen insbesondere programmgesteuert auszusondern, indem die Verschlussklappe 40 hierzu in ihre in Fig. 4 strichpunktiert angedeutete Offenstellung nach unten verschwenkt wird, wobei solche Abfälle nach Eintritt in die Abfallöffnung 44 beispielsweise einem Zerhacker zugeführt werden.

Die Verschlussklappe 40 befindet sich in ihrer Schließstellung mit ihrer Plattenoberseite 46 in der Ebene der Oberseite der beiden Tischplatten 20, 22 und des Übernahmetisches 42. Sie ist mittels seitlicher Tragarme 48, von denen lediglich in den Fig. 2 bis 4 jeweils einer dargestellt ist, auf einer sich parallel zum Sägeschlitz 18 erstreckenden Lagerwelle 50 drehfest angeordnet, die ihrerseis mit ihren Enden in jeweils einer an der Tischplatte 22 befestigten Lagerplatine 52 bzw. 54 (Fig. 1) drehbar gelagert ist.

Zum Verschwenken der Verschlussklappe 40 dient eine als Ganzes mit 56 bezeichnete Betätigungsvorrichtung, die beispielsweise zwei, jeweils in einem Endbereich der Lagerwelle 50 an einem der Gestellrahmen 12 bzw. 14 montierte, vorzugsweise pneumatisch betätigbare Schwenkzylinder 58 bzw. 60 aufweist, deren Kolbenstange 62 teilweise als Zahnstange ausgebildet ist, die mit einem auf der Lagerwelle 50 drehfest angeordneten Ritzel 64 bzw. 66 kämmt. 68 bzw. 70 bezeichnen hierbei jeweils eine an einer der Lagerplatinen 52 bzw. 54 gelagerte Gegenrolle, die sich an einer Flachseite 72 der Kolbenstange 62 bzw. 64 abrollt und einen sicheren Eingriff derselben mit dem zugeordneten Ritzel 64 bzw. 66 gewährleistet.

Die Anordnung der Lagerwelle 50 ist mit Bezug auf die Tischplatte 22 derart unterhalb deren Plattenoberseite angeordnet, dass in der Schließstellung der Verschlussklappe 40 eine koplanare Anordnung ihrer Plattenoberseite 46 zu den Oberseiten der Tischplatte 22 und dem Übernahmetisch 42 gewährleistet ist (s. Fig. 4).

Mit 74 ist ein gestellfester, beispielsweise einem der beiden Tragarme 48 zugeordneter Endschalter bezeichnet, dem beispielsweise an einem der Tragarme 48 eine Schaltnocke 76 zugeordnet ist. Selbstverständlich könnte der Endschalter 74 auch mit einer Schaltnocke zusammenwirken, die an einem anderen sich bei Betätigung der Verschlussklappe verdrehenden Teil, beispielsweise an der Lagerwelle 50 oder dem Ritzel 64, vorgesehen sein kann. Auf die Funktion dieses Endschalters 74 wird weiter unten näher eingegangen.

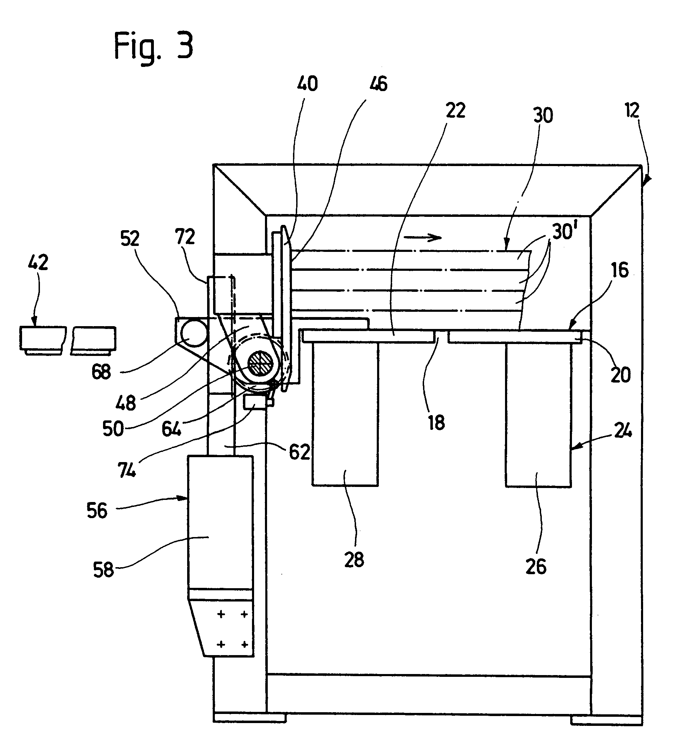

Die Plattenaufteilsäge 10 ist schliesslich noch mit einer Ausrichtvorrichtung ausgestattet, mit deren Hilfe sich Platten bzw. Plattenpakete gegen den Plattenschieber 34 exakt ausrichten lassen. Diese Ausrichtvorrichtung weist einen Anschlag auf, der bei der vorliegenden Konstruktion durch die Verschlussklappe 40 gebildet ist. Fig. 3 zeigt die Anschlagposition der Verschlussklappe 40, wozu diese sich in einer nach oben gerichteten, über den Maschinentisch 16 vorstehenden Vertikalstellung befindet.

Eine Besonderheit bei dieser Konstruktion ist darin zu sehen, dass die Verschlussklappe 40, bevor sie in ihre vertikale Anschlagstellung gesteuert wird (Fig. 3), zunächst in eine solche Stellung gebracht wird, dass sie mit ihrer oberen, die Anschlagfläche bildenden, ebenen Plattenoberseite 46 beispielsweise einem auszurichtenden Plattenpaket 30 zugeneigt ist und demgemäss zwischen ihrer Plattenoberseite 46 und der Oberseite des Maschinentisches 16 einen spitzen Winkel α einschliesst (Fig. 2). Diese Stellung bietet den Vorteil, dass zum Ausrichten beispielsweise des Plattenpaketes 30, wenn dieses mittels des Plattenschiebers 34 an die Verschlussklappe 40 mit verhältnismässig grosser Vorschubgeschwindigkeit herangeschoben wird, die einzelnen Platten 30′ des Plattenpakets sukzessive mit der Verschlussklappe in Berührung kommen und dadurch ein verhältnismässig sanfter Aufprall erreicht wird, wobei die Verschlussklappe 40 gegen den in den Schwenkzylindern 58, 60 wirksamen Luftdruck in ihre Anschlagstellung gemäss Fig. 3 verschwenkt wird. Ein weiterer Vorteil besteht darin, dass diese Schwenkbewegung in die Vertikalstellung zur Ansteuerung des Antriebes des Plattenschiebers 34 zum Stillsetzen des letzteren genutzt werden kann, was über den Endschalter 74 und die Schaltnocke 76 bewerkstelligt wird. Es kann dadurch eine exakte Stillsetzung des Vorschubes erreicht sowie eine Überbeanspruchung der die vertikale Anschlagstellung der Verschlussklappe definierenden Teile der Betätigungsvorrichtung 56 vermieden werden.

Die Verschwenkung der Verschlussklappe in ihre Schliess-, Offen- und Anschlagstellung kann natürlich auch mit einer anderen geeigneten Betätigungsvorrichtung, beispielsweise unter Einsatz eines Stellmotors, erfolgen. Die erläuterte Betätigungsvorrichtung 56 zeichnet sich jedoch durch besondere Einfachheit und funktionelle Zuverlässigkeit aus.

Die Plattenaufteilsäge arbeitet folgendermassen:
Ist beispielsweise ein Plattenpaket 30 aufzuteilen, so wird die Verschlussklappe 40 programmgesteuert zunächst in ihre in Fig. 2 gezeigte Anlegestellung hochgeschwenkt. Anschliessend wird der Plattenschieber 34 in Gang gesetzt, der das Plattenpaket 30 gegen die Verschlussklappe 40 zur Anlage bringt und diese in ihre in Fig. 3 gezeigte vertikale Anschlagstellung zurückschwenkt. Damit sind dann sämtliche übereinanderliegenden Platten 30′ gegen Anschläge 38′ des Plattenschiebers 34 ausgerichtet. Dies erfolgt im Durchlauf. Sobald die Vertikalstellung der Verschlussklappe 40 erreicht ist, wird über den Endschalter 74 die Vorschubbewegung gestoppt, die Klemmzangen 38 des Programmschiebers 34 werden geschlossen, und die Verschlussklappe 40 wird in ihre Offenstellung nach unten verschwenkt (Fig. 4), um die Abfallöffnung 44 zu öffnen.

Das Plattenpaket 30 wird nunmehr zurückgezogen und, entsprechend eines eingegegebenen Steuerprogramms für den Anschnitt an der Trennebene 36 positioniert. Nach erfolgtem Anschnitt wird das Plattenpaket 30 durch den Plattenschieber 34 in die nächste Schnittposition vorgeschoben, wobei während dieser Vorschubbewegung der angefallene Anschnittabfall in die Abfallöffnung 44 geschoben wird. Sobald sich jedoch das Plattenpaket 30 über der Verschlussklappe 40 befindet, bewegt sich diese in ihre in Fig. 4 gezeigte waagrechte Schliessstellung zum Verschliessen der Abfallöffnung 44, so dass der Abstand zwischen dem Maschinentisch 16 und dem Übernahmetisch 42, auf welchen die aufzuteilenden Paketteilstücke aufzuschieben sind, überbrückt wird.

## Patentansprüche

1. Plattenaufteilsäge (10) mit einem Maschinentisch (16), einer zwischen Tischflächenteilen vorgesehenen und sich an der Werkstückaustrittsseite parallel zu einem Sägeschlitz (18) erstreckenden, mittels einer nach unten in eine Offenstellung abklappbaren Verschlussklappe (40) verschliessbaren Abfallöffnung (44) und einer Ausrichtvorrichtung mit wenigstens einem Anschlag, an welchem zum Aufteilen eines Plattenpakets die einzelnen Paketplatten zum gegenseitigen Ausrichten anlegbar sind,
**dadurch gekennzeichnet,**
dass die nach oben in eine über den Maschinentisch (16) vorstehende Anschlagstellung steuerbare Verschlussklappe (40) den Anschlag der Ausrichtvorrichtung bildet.

2. Plattenaufteilsäge nach Anspruch 1, dadurch gekennzeichnet, dass die Verschlussklappe (40) mittels der Betätigungsvorrichtung (56) nach oben in eine erste Stellung steuerbar ist, in welcher sie mit ihrer oberen, die Anschlagfläche bildenden, ebenen Klappenoberseite (46) einem auszurichtenden Plattenpaket zugeneigt ist, und dass der Antrieb der Vorschubvorrichtung (32) zum Anlegen des Plattenstapels (30) an die Verschlussklappe (40) nach deren Mitnahme in ihre aufrechte Anschlagstellung abschaltbar ist.

3. Plattenaufteilsäge nach Anspruch 2, dadurch gekennzeichnet, dass die Vorschubvorrichtung (32) einen in Vorschubrichtung steuerbaren Plattenschieber (34) aufweist, der mit Spannzangen (38) ausgerüstet ist, durch die bei Unterbrechen seiner Bewegung zum Anlegen des Plattenstapels (30) an die Verschlussklappe (40) der Plattenstapel (30) am Plattenschieber (34) kantenbündig ausgerichtet festspannbar ist.

## Claims

1. Saw for dividing up panels (10) having a worktable (16), a waste opening (44), which is provided between worktable surface portions, which extends on the workpiece discharge end in parallel to a sawing slot (18) and which can be closed by means of a hinged cover plate (40) that can be swung down into an open position, and having further an aligning device comprising at least one stop against which the individual panels of a panel stack can be moved for being mutually aligned when dividing up a panel stack,
**characterized in that**
the hinged cover plate (40), which can be moved in a controlled way into an upward position in which it projects beyond the worktable (16), forms the stop of the aligning device.

2. Saw for dividing up panels according to claim 1, characterized in that the hinged cover plate (40) can be moved in a controlled way, by the actuating means (56), into an upward first position in which its upper flat surface (46) forming the stop faces a panel stack to be aligned, and that the drive of the feeding means (32), which acts to move the panel stack (30) against the hinged cover plate (40), can be switched off after the latter has been entrained into its upright stop position.

3. Saw for dividing up panels according to claim 2, characterized in that the feeding means (32) comprises a panel transport mechanism which can be controlled to move in the feeding direction and which is equipped with clamping pliers (38) by means of which the panel stack (30) can be clamped in position on the panel feeding mechanism (34), with its edges properly aligned, when its movement by which the panel stack (30) is pushed against the hinged cover plate (40) is interrupted.

## Revendications

1. Scie déligneuse de plaque (10) comportant une table (16), une ouverture à déchets (44) prévue entre des parties de la surface de la table et s'étendant sur le côté sortie de la pièce parallèlement à une fente de sciage (18), cette ouverture (44) pouvant être obturée au moyen d'un clapet obturateur (40) pouvant être rabattu vers le bas en une position d'ouverture, ainsi qu'un dispositif d'alignement comportant au moins une butée à laquelle peuvent être appliqués, pour le délignage d'un paquet de plaques, les différents paquets de plaques en vue de leur alignement mutuel, caractérisée en ce que le clapet obturateur (40) pouvant être commandé, en direction du haut, vers une position de butée faisant saillie de la table de machine (16) constitue la butée du dispositif d'alignement.

2. Scie de délignage de plaque selon la revendication 1, caractérisée en ce que le clapet obturateur (40) peut être commandé au moyen du dispositif de commande (56), en direction du haut, vers une première position dans laquelle ledit clapet est incliné, par son côté supérieur plat (46) constituant la face de butée, vers un paquet de plaques alignées, et en ce que l'entraînement du dispositif d'avance (32), pour l'application de la pile de plaques (30) contre le clapet obturateur (40), peut être débrayé après avoir amené ledit clapet dans sa position de butée verticale.

3. Scie déligneuse de plaque selon la revendication 2, caractérisée en ce que le dispositif d'avance (32) présente un poussoir de plaque (34) pouvant être commandé dans la direction d'avance, lequel est équipé de pinces de serrage (38) au moyen duquel, lors de l'interruption de son mouvement pour l'application de la pile de plaques (30) contre le clapet obturateur (40), ladite pile de plaques (30) peut être serrée solidement sur ledit poussoir de plaque (34), avec alignement des arêtes de la pile.
